# EUROPEAN PATENT APPLICATION

(11) **EP 2 117 165 A1**
(43) Date of publication of application: **11.11.2009**
(21) Application number: 08700099.8
(22) Date of filing: 10.01.2008
(51) Int. Cl.: H04L 12/18

(54) **PROMPT METHOD AND APPARATUS OF SHORT MESSAGE SPLITTING**

(30) Priority: 02.04.2007 CN 200710065052
(71) Applicant: Huawei Technologies Co., Ltd., Longgang District, Shenzhen Guangdong 518129 (CN)
(72) Inventor: DING, Yi, Nanjing Jiangsu 210012 (CN)
(74) Representative: Thun, Clemens
(86) International application number: PCT/CN2008/070075
(87) International publication number: WO 2008/119266

(57) **Abstract**

The present invention discloses a prompt method of short message splitting including: pre-obtaining, by a terminal, splitting rule data for a short message transmitted by a subscriber of the terminal in various operators' networks; and calculating, by the terminal, the number of short message segments obtained by splitting the short message edited by the subscriber based on the splitting rule data and informing the subscriber of it. The present invention also discloses a prompt apparatus of short message splitting including: a splitting rule setting module configured to pre-obtain splitting rule data for a short message transmitted by a subscriber of a terminal in various operators' networks; a calculation module configured to calculate the number of short message segments obtained by splitting the short message edited by the subscriber based on the splitting rule data obtained by the splitting rule setting module; and an informing module configured to inform the subscriber of the number of short message segments calculated by the calculation module. The present invention can prompt the subscriber timely and accurately with the exact number of short message segments obtained by splitting the short message transmitted by the subscriber in the operator's network.

## Description

### FIELD OF THE INVENTION

The present invention relates to short message processing technology, and more particularly, to a prompt method and apparatus of short message splitting.

### BACKGROUND OF THE INVENTION

In recent years, the rapid increase of the number of subscribers and the increasingly perfect basic networks in mobile communications provide favorable conditions for the development of value-added services in mobile communications. In many value-added services, short message services are welcomed by subscribers.

Meanwhile, terminals for transmitting short messages change quickly as well. From single transmitting of short messages to group transmitting of short messages and from handheld terminals to computer software clients, short messages have evolved from the limited number of characters in length, which is originally restricted in handheld terminals to ensure that only one short message can be received or transmitted at a time by the counterpart, to ultra-long short messages, which may be transmitted just one time by terminals. A short message gateway, or a short message server, or a short message client automatically splits the ultra-long short message into several short message segments according to a reception rule and transmits the ultra-long short message segment by segment.

The inventor, in implementing the present invention, has discovered that the following problem exists in conventional technology.

Because of the differences among operators' networks and short message devices and the differences among operation strategies for short message services in various countries, there are variations in the splitting and charging of short messages in the interconnection and interworking between short messages in different operators' networks and short message devices. For example, when a subscriber transmits short messages to another subscriber who uses a different operator's network, because the unit in which the short messages are split in various operators' networks may be different, the number of the short messages received by receivers in various operators' networks may be different. In addition, the unit price for charging short message by various operators' networks may be different as well. Moreover, in a variety of personalized short message packages or preferential activities provided by the same operator for different subscriber groups, the splitting or charging rule for short messages may also differ.

However, the prompt method of short message splitting used by an existing terminal can only calculate and prompt the subscriber the number of short message segments, which is obtained by splitting the short message transmitted by the subscriber according to a fixed rule for short message splitting, while the fixed rule for short message splitting used by the terminal may not reflect accurately the actual manner of short message splitting if the subscriber employs various operators' networks or short message packages. Therefore, with this method, the subscriber may neither learn of the exact number of short message segments timely, which is obtained by splitting the transmitted short message in the operator's network, nor learn of the charging situation of the transmitted short message timely.

### SUMMARY

Embodiments of the present invention provide a prompt method and apparatus of short message splitting in which the subscriber may be prompted timely and accurately with the exact number of short message segments obtained by splitting the short message transmitted by a subscriber in the operator's network.

A prompt method of short message splitting provided by the embodiments of the present invention includes: pre-obtaining, by a terminal, splitting rule data for a short message transmitted by a subscriber of the terminal in various operators' networks; and calculating, by the terminal, the number of short message segments obtained by splitting the short message edited by the subscriber based on the splitting rule data, and informing the subscriber of it.

The short message may be a short message with content being in the form of pure text, a short message with content being in the form of multimedia and other enhanced short massage. The terminal may be a subscriber terminal using short message services, such as mobile terminal, computer software terminal, etc.

In the solution described above, the terminal pre-obtains the splitting rule data actually used for the short message transmitted by the subscriber of the terminal in various operators' networks, not a fixed splitting rule used by the existing terminal, such that various splitting rules adopted in various operators' networks for different subscribers can be reflected timely and accurately, thereby ensuring the flexibility and accuracy fully. The terminal calculates and displays the number of short message segments, which is obtained by splitting the short message edited by the subscriber based on the pre-obtained splitting rule data for the short message transmitted by the subscriber of the terminal in various operators' networks, to the subscriber such that the subscriber can be prompted timely with the number of short message segments obtained by splitting actually the short message edited by the subscriber in operators' networks.

A prompt apparatus of short message splitting provided by the embodiments of the present invention includes: a splitting rule setting module configured to pre-obtain splitting rule data for a short message transmitted by a subscriber of a terminal in various operators' networks; a calculation module configured to calculate the number of short message segments obtained by splitting the short message edited by the subscriber based on the splitting rule data obtained by the splitting rule setting module; and an informing module configured to inform the subscriber of the number of short message segments calculated by the calculation module.

In the solution described above, the splitting rule setting module pre-obtains the splitting rule data actually used for the short message transmitted by the subscriber of the terminal in various operators' networks, not a fixed splitting rule used by the existing terminal, such that various splitting rules adopted in various operators' networks for different subscribers can be reflected timely and accurately, thereby ensuring the flexibility and accuracy fully. The calculation module calculates the number of short message segments obtained by splitting the short message edited by the subscriber based on the splitting rule data pre-obtained by the splitting rule setting module and actually used for the short message transmitted by the subscriber of the terminal in various operators' networks, and the display module displays the number of short message segments, which is calculated by the calculation module, to the subscriber such that the subscriber can be prompted timely with the number of short message segments obtained by splitting actually the short message edited by the subscriber in operators' networks.

In summary, in the embodiments of the present invention, the splitting rule data actually used for the short messages transmitted by the subscriber of the terminal in various operators' networks, not the fixed splitting rule used by the existing terminal, are pre-obtained, and the number of short message segments obtained by splitting the short message edited by the subscriber is calculated and displayed to the subscriber based on the pre-obtained splitting rule data such that the subscriber can be prompted timely with the exact number of short message segments obtained by splitting the short message transmitted by the subscriber in operators' networks.

### BRIEF DESCRIPTION OF THE DRAWING(S)

Fig. 1 is a flowchart of the second embodiment of a prompt method of short message splitting according to the present invention;

Fig. 2 is a flowchart of the third embodiment of a prompt method of short message splitting according to the present invention;

Fig. 3 is a flowchart of the fourth embodiment of a prompt method of short message splitting according to the present invention;

Fig. 4 is a flowchart of the fifth embodiment of a prompt method of short message splitting according to the present invention;

Fig. 5 is an architecture diagram of the first embodiment of a prompt apparatus of short message splitting according to the present invention;

Fig. 6 is an architecture diagram of the second embodiment of a prompt apparatus of short message splitting according to the present invention;

Fig. 7 is an architecture diagram of the third embodiment of a prompt apparatus of short message splitting according to the present invention;

Fig. 8 is an architecture diagram of the fourth embodiment of a prompt apparatus of short message splitting according to the present invention;

Fig. 9 is an architecture diagram of the fifth embodiment of a prompt apparatus of short message splitting according to the present invention.

### DETAILED DESCRIPTION

Solutions in the embodiments of the present invention will be further described in detail below in conjunction with the accompany drawings and embodiments.

The first embodiment of the present invention provides a prompt method of short message splitting, which includes: pre-obtaining, by a terminal, splitting rule data for a short message transmitted by a subscriber of the terminal in various operators' networks; calculating, by the terminal, the number of short message segments obtained by splitting the short message edited by the subscriber based on the splitting rule data and informing the subscriber of it.

In the first embodiment, the terminal needs to pre-obtain the splitting rule data for the short message transmitted by the subscriber of the terminal in various operators' networks. After the splitting rule data is obtained by the terminal, for a subsequent short message inputted and edited by the subscriber, the terminal calculates the number of short message segments obtained by splitting the short message edited by the subscriber based on the splitting rule data and inform the subscriber of it. In other words, the terminal pre-obtains the splitting rule data once to calculate the number of short message segments obtained by splitting the subsequent short message edited by the subscriber based on the splitting rule data and display it to the subscriber without obtaining the splitting rule data repeatedly many times. In the first embodiment, the terminal pre-obtains the splitting rule data actually used for the short message transmitted by the subscriber of the terminal in various operators' networks, not the fixed splitting rule used by the existing terminal, such that various splitting rules adopted in various operators' networks for different subscribers can be reflected timely and accurately, thereby ensuring the flexibility and accuracy fully. The terminal calculates the number of short message segments obtained by splitting the short message edited by the subscriber based on the pre-obtained splitting rule data for the short message transmitted by the subscriber of the terminal in various operators' networks, and informs the subscriber of the number of short message segments in an existing prompt manner, such as prompt tone, or prompt image, or a combination of various prompt manners, for example, by means of picture display, such that the subscriber can be prompted timely with the number of short message segments obtained by splitting actually the short message edited by the subscriber in operators' networks.

It should be understood by those skilled in the art that, in the first embodiment, the terminal may pre-obtain the splitting rule data in various manners, such as receiving the splitting rule data delivered by a server, obtaining actively the splitting rule data from the server, or pre-storing the splitting rule data in the terminal. The splitting rule data may be transmitted between the terminal and the server based on communication protocols, such as Transmission Control Protocol (TCP), User Datagram Protocol (UDP), etc., which is within the protection scope claimed by the solution of the first embodiment. In other words, in the first embodiment, pre-obtaining, by the terminal, the splitting rule data for the short message transmitted by the subscriber of the terminal in various operators' networks may specifically include pre-storing, pre-obtaining or pre-receiving, by the terminal, the splitting rule data for the short message transmitted by the subscriber of the terminal, which is sent by the server, in various operators' networks.

It should be understood by those skilled in the art that, in the first embodiment, according to the requirements of practical applications, two implementation modes may be adopted, that is, the terminal may calculate and display instantly the number of the short message segments when the subscriber edits the short message and/or the terminal may calculate and display the number of the short message segments after the subscriber has edited the short message, both of which are within the protection scope claimed by the solution of the first embodiment. Certainly, the terminal may select the two implementation modes described above based on the predefined setting of the subscriber, for example, based on the predefined setting of the subscriber, the terminal may select to calculate and display instantly the number of the short message segments when the subscriber edits the short message and/or to calculate and display the number of the short message segments after the subscriber has edited the short message, both of which are within the protection scope claimed by the solution of the first embodiment.

For the implementation mode in which the terminal calculates and displays instantly the number of the short message segments when the subscriber edits the short message, the terminal may calculate the corresponding number of the short message segments obtained by splitting the content of the short massage edited by the subscriber in various operators' networks based on the pre-obtained splitting rule data corresponding to various operators' networks. In this implementation mode, calculating the number of short message segments obtained by splitting the short message edited by the subscriber based on the splitting rule data and informing the subscriber of it, as described in the first embodiment, may includes: when the subscriber inputs and edits the short message, the terminal calculates instantly the number of short message segments obtained by splitting the inputted and edited short message based on the splitting rule data corresponding to operators' networks, and displays it instantly to the subscriber.

Fox example, the terminal pre-obtains the splitting rule data of operator A and operator B, and the content of the splitting rule data of operator A indicates that the short message is split in units of 70 bytes and the content of the splitting rule data of operator B indicates that the short message is split in units of 116 bytes. When the subscriber inputs and edits the short message, the terminal calculates instantly the number of the short message segments obtained by splitting the content of the inputted and edited short message based on the splitting rule data of operator A and the splitting rule data of operator B respectively, and displays the calculation results to the subscriber. The results may be displayed in an interface in which the subscriber edits the short message (for example, displayed above, under, on the left or right of the window where the subscriber inputs the content of the short message) such that the subscriber, when editing the short message, may learn clearly and momentarily that the actual number of short message segments obtained by splitting the short message inputted by the subscriber in various operators' networks changes with the increasing and decreasing of the inputted content such that the subscriber may know timely and accurately the exact number of short message segments obtained by splitting his short message inputted and edited in various operators' networks, thereby increasing the flexibility, immediacy and practicality and improving greatly the service satisfaction of the subscriber.

For the implementation mode in which the terminal calculates and displays instantly the number of the short message segments when the subscriber edits the short message, the terminal may obtain the corresponding number of the short message segments only based on the splitting rule data of the operator's network corresponding to the called number inputted or selected by the subscriber. This implementation mode is exemplified in the second embodiment of the prompt method of short message splitting according to the present invention.

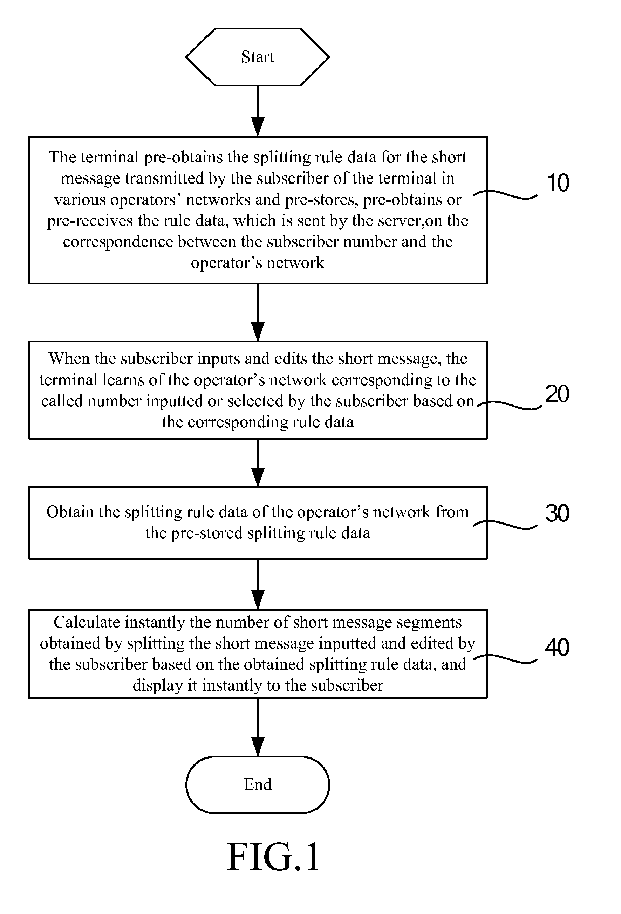

Referring to Fig. 1, the second embodiment of the prompt method of short message splitting according to the present invention includes the following steps: first at step 10, by pre-storing, pre-obtaining or pre-receiving the splitting rule data sent by the server, the terminal pre-obtains the splitting rule data for the short message transmitted by the subscriber of the terminal in various operators' networks and the rule data on the correspondence between the subscriber number and the operator's network; then at step 20, when the subscriber inputs and edits the short message, the terminal learns of the operator's network corresponding to the called number inputted or selected by the subscriber based on the corresponding rule data; then at step 30, the terminal obtains the splitting rule data of the operator's network corresponding to the called number from the pre-stored splitting rule data; and then at step 40, the terminal calculates instantly the number of short message segments obtained by splitting the short message inputted and edited by the subscriber based on the obtained splitting rule data, and displays it instantly to the subscriber.

In the second embodiment, the terminal learns of the operator's network employed when the subscriber edits the short message based on the pre-obtained corresponding relationship rule data between the subscriber number (which is an identification number assigned to the subscriber by the operator and used to uniquely identify the subscriber) and the operator's network and the called number inputted or selected by the subscriber (from a number record pre-stored by the terminal). Then, the terminal calculates the number of short message segments obtained by splitting the short message edited by the subscriber only based on the splitting rule data of the operator's network and displays it to the subscriber.

For example, the terminal pre-obtains the splitting rule data of operator A and operator B, and when the subscriber inputs and edits the short message, the terminal learns that the operator's network, which is employed when the subscriber edits the short message, is operator A's network, based on the called number inputted or selected by the subscriber and the pre-obtained corresponding rule data. Then the terminal calculates instantly the number of the short message segments obtained by splitting the content of the short message inputted and edited by the subscriber based on the pre-obtained splitting rule data corresponding to operator A's network to obtain the number of short message segments obtained by splitting the content according to the splitting rule of operator A, and displays the calculation results to the subscriber in a display manner similar to that in the first embodiment. The second embodiment may calculate and display the corresponding and exact number of the short message segments in the operators' networks, which is employed when the subscriber edits the short message, thereby further increasing the flexibility.

It should be understood by those skilled in the art that, in the second embodiment, the splitting rule data and the rule data on the correspondence between the subscriber number and the operator's network pre-obtained by the terminal may be stored respectively in the terminal or may be stored in the terminal in a uniform data form (for example, uniform data table or database indexed by information about operators), both of which are within the protection scope claimed by the solution of the second embodiment. For example, the splitting rule data and the rule data on the correspondence between the subscriber number and the operator's network may be stored in a uniform form including the following:

1. the name of the operator;
2. the number section corresponding to the operator;
3. the splitting rule data corresponding to the operator.

The implementation mode, in which the terminal calculates and displays the number of the short message segments after the subscriber has edited the short message and before he sends the short message, will be exemplified in the third embodiment of the prompt method of short message splitting according to the present invention.

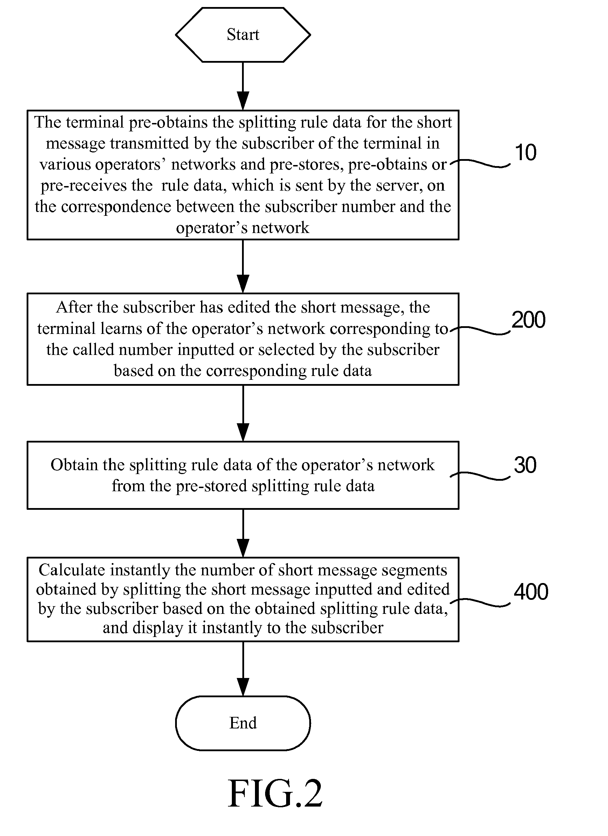

Referring to Fig. 2, the third embodiment of the prompt method of short message splitting according to the present invention includes the following steps: at step 10, by pre-storing, pre-obtaining or pre-receiving the splitting rule data sent by the server, the terminal pre-obtains the splitting rule data for the short message transmitted by the subscriber of the terminal in various operators' networks and the rule data on the correspondence between the subscriber number and the operator's network; then at step 200, after the subscriber has edited the short message, the terminal obtains the operator's network corresponding to the called number inputted or selected by the subscriber based on the corresponding rule data; then at step 30, the terminal obtains the splitting rule data of the operator's network corresponding to the called number from the pre-stored splitting rule data; and then at step 400, the terminal calculates the number of short message segments obtained by splitting the short message edited by the subscriber based on the obtained splitting rule data, and displays it to the subscriber.

The difference between the third and the second embodiments is that in the third embodiment, the terminal calculates and displays the number of the short message segments after the subscriber has inputted and edited the content of the short message, thereby decreasing the influence of frequent calculation and display of the number of the short message segments on performance of the terminal. It should be understood by those skilled in the art that, according to the requirements of practical applications, the number of the short message segments may be calculated and displayed after the subscriber has inputted and edited the content of the short message and before he sends the short message; or the number of the short message segments may be calculated and displayed after the subscriber has edited the content of the short message and sent the short message; or the second and the third embodiments may be combined flexibly, that is, the number of the short message segments may be calculated and displayed instantly either when the subscriber inputs and edits the content of the short message or after the subscriber has edited the content of the short message, all of which are within the protection scope claimed by the solutions of the second and the third embodiments.

Preferably, in the first to the third embodiments, the terminal may also pre-obtain the unit price charged for a short message transmitted by the subscriber of the terminal by various operators' networks, and calculate and display the cost for the short message edited by the subscriber based on the pre-obtained unit price after calculating the number of short message segments edited by the subscriber so that the subscriber can learn, timely and accurately, of the real cost for the short message edited by the subscriber in corresponding operators' networks, thereby increasing greatly the flexibility and service satisfaction of the subscriber. This implementation mode will be further exemplified in the prompt method of short message splitting according to the fourth and the fifth embodiments of the present invention.

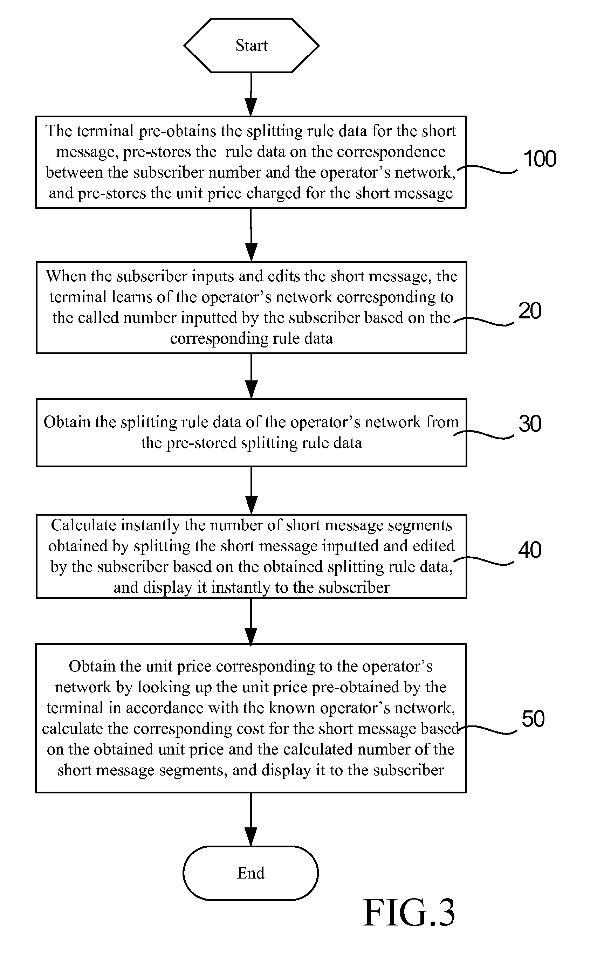

As shown in Fig. 3, the fourth embodiment of the prompt method of short message splitting according to the present invention includes the following steps: at step 100, by pre-storing, pre-obtaining or pre-receiving the splitting rule data sent by the server, the terminal pre-obtains the splitting rule data for the short message transmitted by the subscriber of the terminal in various operators' networks, the rule data on the correspondence between the subscriber number and the operator's network and the unit price charged for the short message transmitted by the subscriber of the terminal in various operators' networks; then at step 20, when the subscriber inputs and edits the short message, the terminal learns of the operator's network corresponding to the called number inputted or selected by the subscriber based on the corresponding rule data; then at step 30, the terminal obtains the splitting rule data of the operator's network corresponding to the called number from the pre-stored splitting rule data; then at step 40, the terminal calculates instantly the number of short message segments obtained by splitting the short message inputted and edited by the subscriber based on the obtained splitting rule data, and displays it instantly to the subscriber; and finally at step 50, the terminal obtains the unit price corresponding to the operator's network by looking up the unit price pre-obtained by the terminal in accordance with the known operator's network, calculates the corresponding cost for the short message based on the obtained unit price and the calculated number of the short message segments, and displays it to the subscriber.

In the fourth embodiment, when the subscriber inputs and edits the content of the short message, the number of short message segments, obtained by splitting the content of the short message edited by the subscriber in the operator's network, and the corresponding cost are calculated and displayed to the subscriber. In the fourth embodiment, the terminal pre-obtains the unit price (i.e., the cost for each short message segment) charged for the short message of the subscriber of terminal, which is charged by various operators' networks, so that the subscriber can learn timely and accurately of the actual cost for the short message edited by the subscriber in various real application scenarios (for example, different unit price being set by different operators or different unit price resulting from preferential activities provided by the same operator for different subscribers) and can control the length of the content of the edited short message based on the cost information.

It should be understood by those skilled in the art that, in the fourth embodiment, the displaying the number of the short message segments in step 40 and the displaying the cost for the short message in step 50 may be executed successively or simultaneously, depending on the requirements of practical applications, which is within the protection scope claimed by the solution of the fourth embodiment.

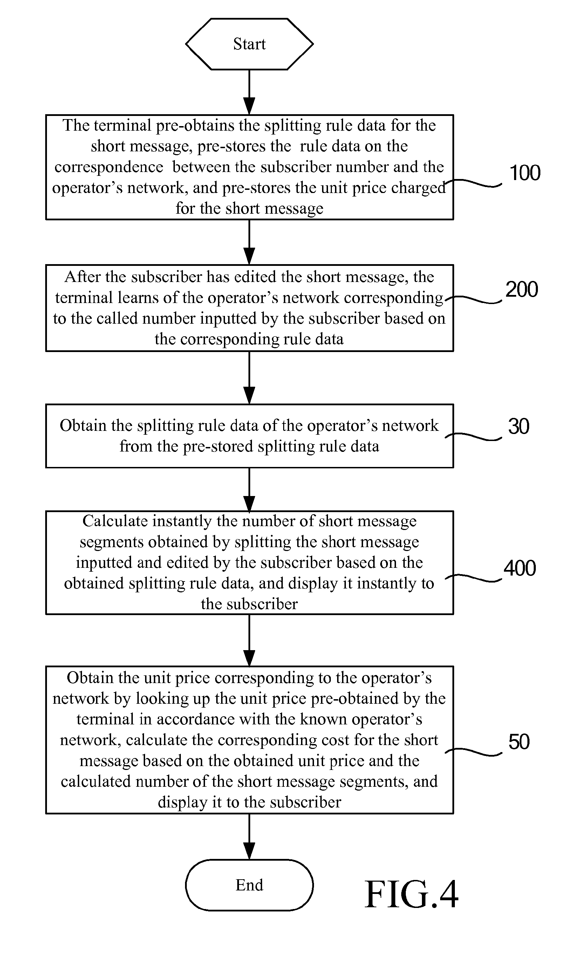

As shown in Fig. 4, the fifth embodiment of the prompt method of short message splitting according to the present invention includes the following steps: at step 100, by pre-storing, pre-obtaining or pre-receiving the splitting rule data sent by the server, the terminal pre-obtains the splitting rule data for the short message transmitted by the subscriber of the terminal in various operators' networks, the rule data on the correspondence between the subscriber number and the operator's network and the unit price charged for the short message transmitted by the subscriber of the terminal, which is charged by various operators' networks; then at step 200, when the subscriber has edited the short message, the terminal learns of the operator's network corresponding to the called number inputted or selected by the subscriber based on the corresponding rule data; then at step 30, the terminal obtains the splitting rule data of the operator's network corresponding to the called number from the pre-stored splitting rule data; then at step 400, the terminal calculates the number of short message segments obtained by splitting the short message edited by the subscriber based on the obtained splitting rule data, and displays it to the subscriber; and finally at step 50, the terminal obtains the unit price corresponding to the operator's network by looking up the charge rate pre-obtained by the terminal in accordance with the known operator's network, calculates the corresponding cost for the short message based on the obtained unit price and the calculated number of the short message segments, and displays it to the subscriber.

In the fifth embodiment, after the subscriber has inputted and edited the content of the short message, the number of short message segments, obtained by splitting the content of the short message edited by the subscriber in the operator's network, and the corresponding cost are calculated and displayed to the subscriber. In the fifth embodiment, the terminal pre-obtains the unit price (i.e., the cost for each short message segment) charged for the short message of the subscriber of terminal, which is charged by various operators' networks, such that the subscriber can learn timely and accurately of the actual cost for the short message edited by the subscriber in various real application scenarios (for example, different unit price being charged by different operators or different unit price resulting from preferential activities provided by the same operator for different subscribers) .

It should be understood by those skilled in the art that, in the fifth embodiment, the displaying the number of the short message segments in step 400 and the displaying the cost for the short message in step 50may be executed successively or simultaneously, depending on the requirements of practical applications, which is within the protection scope claimed by the solution of the fifth embodiment.

It should be understood by those skilled in the art that, in the fourth and the fifth embodiments, the splitting rule data pre-obtained by the terminal, the rule data on the correspondence between the subscriber number and the operator's network and the unit price for the short message transmitted by the subscriber of the terminal in various operators' networks may be stored respectively in the terminal or may be stored in the terminal in a uniform data form (for example, uniform data table or database indexed by information about operators), both of which are within the protection scope claimed by the solutions of the fourth and the fifth embodiments. For example, the splitting rule data, the rule data on the correspondence between the subscriber number and the operator's network and the unit price for the short message transmitted by the subscriber of the terminal in various operators' networks may be stored in a uniform form including the following:

1. the name of the operator;
2. the number section corresponding to the operator;
3. the splitting rule data corresponding to the operator;
4. the unit price charged by the operator for the subscriber.

Furthermore, it should be understood by those skilled in the art that, all or some of the steps in the first to fifth embodiments of the prompt method of short message splitting according to the present invention may be implemented through programs which instruct the relevant hardware. The programs may be stored in a computer readable storage medium, such as Read Only Memory (ROM), Random Access Memory (RAM), magnetic disk, optical disc, etc.

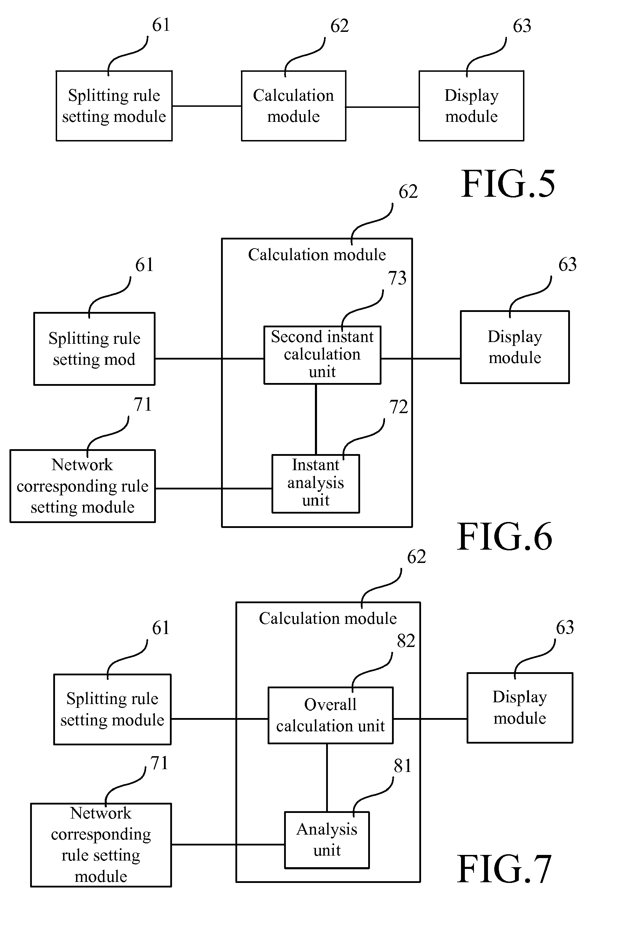

As shown in Fig. 5, the first embodiment of a prompt apparatus of short message splitting according to the present invention includes: a splitting rule setting module 61 configured to pre-obtain splitting rule data for a short message transmitted by a subscriber of a terminal in various operators' networks; a calculation module 62 configured to calculate the number of short message segments obtained by splitting the short message edited by the subscriber based on the splitting rule data obtained by the splitting rule setting module 61; and an informing module configured to inform the subscriber of the number of short message segments calculated by the calculation module 62. The informing module includes a display module 63 configured to display the calculated number of the short message segments to the subscriber or a voice prompt module configured to prompt the subscriber with the obtained number of the short message segments using voice prompt.

In the first embodiment of the prompt apparatus of short message splitting according to the present invention, the splitting rule setting module 61 pre-obtains the splitting rule data actually used for the short message transmitted by the subscriber terminal in various operators' networks, not a fixed splitting rule used by the existing terminal, so that various splitting rules adopted by various operators' networks for different subscribers can be reflected timely and accurately, thereby ensuring the flexibility and accuracy fully. The calculation module 62 calculates the number of short message segments obtained by splitting the short message edited by the subscriber based on the splitting rule data pre-obtained by the splitting rule setting module 61 for the short message transmitted by the subscriber of the terminal in various operators' networks, and the display module 63 displays the number of short message segments, which is calculated by the calculation module 62, to the subscriber so that the subscriber can be prompted timely and accurately with the number of short message segments obtained by splitting actually the short message edited by the subscriber in the operators' networks.

It should be understood by those skilled in the art that, in the first embodiment of the prompt apparatus of short message splitting according to the present invention, the splitting rule setting module 61 may pre-obtain the splitting rule data in various manners, such as receiving the splitting rule data delivered by a server, obtaining actively the splitting rule data from the server, and pre-storing the splitting rule data in the terminal, all of which are within the protection scope claimed by the solution of the first embodiment of the prompt apparatus of short message splitting according to the present invention. In other words, in the first embodiment of the prompt apparatus of short message splitting according to the present invention, the splitting rule setting module may include: a storage unit configured to pre-store the splitting rule data for the short message transmitted by the subscriber of the terminal in various operators' networks; and/or an acquisition unit configured to pre-obtain the splitting rule data for the short message transmitted by the subscriber of the terminal in various operators' networks from a server; and/or a receiving unit configured to pre-receive the splitting rule data for the short message transmitted by the subscriber of the terminal, which is sent by the server, in various operators' networks.

It should be understood by those skilled in the art that, in the first embodiment of the prompt apparatus of short message splitting according to the present invention, according to the requirements of practical applications, two implementation modes may be adopted, that is, implementation mode in which the calculation module may calculate instantly the number of the short message segments when the subscriber edits the short message and the display module may display instantly the number of the short message segments when the subscriber edits the short message, and/or implementation mode in which the calculation module may calculate the number of the short message segments after the subscriber has edited the short message and the display module may display the number of the short message segments after the subscriber has edited the short message, or one or both of the two implementation modes may be selected based on the predefined setting of the subscriber, all of which are within the protection scope claimed by the solution of the first embodiment of the prompt apparatus of short message splitting according to the present invention. For example, in the implement mode where the number of the short message segments is calculated and displayed instantly when the subscriber edits the short message, in the first embodiment of the prompt apparatus of short message splitting according to the present invention, the calculation module 62 may include a first instant calculation unit (not shown) connected with the splitting rule setting module 61 and the display module 63 and configured to calculate the number of the short message segments obtained by splitting the short message inputted and edited by the subscriber based on the splitting rule data, which is stored by the splitting rule setting module 61 and is corresponding to various operators' networks, and transmit the number of the short message segments to the display module 63 to display it to the subscriber.

Fig.6 is an architecture diagram of the second embodiment of the prompt apparatus of short message splitting according to the present invention. The difference between the second and the first embodiments of the prompt apparatus of short message splitting according to the present invention is that the second embodiment further includes a network corresponding rule setting module 71 configured to pre-store, pre-obtain or pre-receive the rule data on the correspondence between the subscriber number and the operator's network, which is sent by the server. The calculation module 62 includes an instant analysis unit 72 connected with the network corresponding rule setting module 71 and a second instant calculation unit 73 connected with the splitting rule setting module 61, the instant analysis unit 72 and the display module 63. The instant analysis unit 72 is configured to learn of the operator's network corresponding to the called number inputted or selected by the subscriber based on the corresponding rule data stored by the network corresponding rule setting module 71 when the subscriber inputs and edits the short message. The second instant calculation unit 73 is configured to obtain the splitting rule data, which is stored by the splitting rule setting module 61 and is corresponding to the operator's network known by the instant analysis unit 72, and calculate instantly the number of short message segments obtained by splitting the short message inputted and edited by the subscriber based on the obtained splitting rule data and transmit it to the display module 63, which displays it to the subscriber instantly.

In the second embodiment, the instant analysis unit 72 learns of the operator's network employed when the subscriber edits the short message, based on the corresponding relationship rule data between the subscriber number (which is an identification number assigned to the subscriber by the operator and used to uniquely identify the subscriber) and the operator's network, which is pre-obtained by the network corresponding rule setting module 71, and the called number inputted or selected by the subscriber (from a number record pre-stored by the terminal). Then, the second instant calculation unit 73 calculates the number of short message segments obtained by splitting the content of the short message edited by the subscriber based on the splitting rule data of the operator's network and the display module 63 displays it instantly to the subscriber. Therefore, the subscriber, when editing the short message, may learn clearly and momentarily that the number of short message segments obtained by splitting actually the short message inputted by the subscriber in various operators' networks changes with the increasing and decreasing of the entered content. Thus, the corresponding and exact number of short message segments may be calculated and displayed for the operator's network employed actually when the subscriber edits the short message, thereby further increasing the flexibility.

Fig.7 is an architecture diagram of the third embodiment of the prompt apparatus of short message splitting according to the present invention. The difference between the third and the first embodiments of the prompt apparatus of short message splitting according to the present invention is that the third embodiment further includes a network corresponding rule setting module 71 configured to pre-store, pre-obtain or pre-receive the rule data on the correspondence between the subscriber number and the operator's network, which is sent by the server. The calculation module 62 includes an analysis unit 81 connected with the network corresponding rule setting module and an overall calculation unit 82 connected with the splitting rule setting module 61, the analysis unit 81 and the display module 63. The analysis unit 81 is configured to learn of the operator's network corresponding to the called number inputted or selected by the subscriber based on the corresponding rule data stored by the network corresponding rule setting module 71 after the subscriber has edited the short message. The overall calculation unit 82 is configured to obtain the splitting rule data, which is stored by the splitting rule setting module 61 and is corresponding to the operator's network known by the analysis unit 81, and calculate the number of short message segments obtained by splitting the short message edited by the subscriber based on the obtained splitting rule data and transmit it to the display module 63, which displays it to the subscriber.

The difference between the third and the second embodiments of the prompt apparatus of short message splitting according to the present invention is that in the third embodiment, the number of the short message segments is calculated and displayed after the subscriber has inputted and edited the content of the short message, thereby decreasing the influence of frequent calculation and display of the number of the short message segments on performance of the terminal.

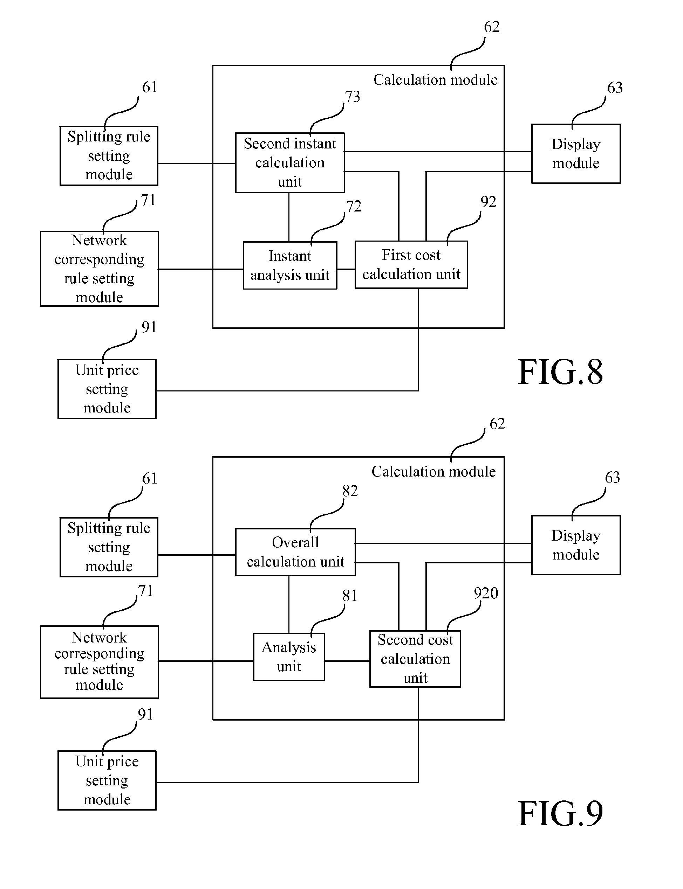

Fig.8 is an architecture diagram of the fourth embodiment of the prompt apparatus of short message splitting according to the present invention. The difference between the fourth and the second embodiments of the prompt apparatus of short message splitting according to the present invention is that the fourth embodiment further includes a unit price setting module 91 configured to pre-store, pre-obtain or pre-receive the unit price for charging the short message transmitted by the subscriber of the terminal, which is sent by the server, in various operators' networks. The calculation module 62 further includes a first cost calculation unit 92 connected with the unit price setting module 91, the instant analysis unit 72, the second instant calculation unit 73 and the display module 63 and configured to obtain the unit price, which is stored by the unit price setting module 91 and is corresponding to the operator's network known by the instant analysis unit 72, calculate the corresponding cost for the short message based on the obtained unit price and the number of short message segments calculated by the second instant calculation unit 73 and transmit it to the display module 63, which displays it to the subscriber.

In the fourth embodiment of the prompt apparatus of short message splitting according to the present invention, when the subscriber inputs and edits the content of the short message, the number of short message segments, obtained by splitting the content of the short message edited by the subscriber in the operator's network, and the corresponding cost is calculated instantly and displayed to the subscriber so that the subscriber can learn timely and accurately of the actual cost for the short message edited by the subscriber and may control the length of the content of the edited short message based on the cost information.

It should be understood by those skilled in the art that, in the fourth embodiment, the displaying of the number of the short message and the displaying of the cost for the short message by the display module 63 may be executed successively or simultaneously, depending on the requirements of practical applications, which is within the protection scope claimed by the solution of the fourth embodiment.

Fig.9 is an architecture diagram of the fifth embodiment of the prompt apparatus of short message splitting according to the present invention. The difference between the fifth and the third embodiments according to the present invention is that the fifth embodiment further includes a unit price setting module 91 configured to pre-store, pre-obtain or pre-receive the unit price for charging a short message transmitted by the subscriber of the terminal, which is sent by the server, in various operators' networks. The calculation module 62 further includes a second cost calculation unit 920 connected with the unit price setting module 91, the analysis unit 81, the overall calculation unit 82 and the display module 63 and configured to obtain the unit price, which is stored by the unit price setting module 91 and is corresponding to the operator's network known by the analysis unit 81, calculate the corresponding cost for the short message based on the obtained unit price and the number of short message segments obtained by the overall calculation unit 82 and transmit it to the display module 63, which displays it to the subscriber.

In the fifth embodiment of the prompt apparatus of short message splitting according to the present invention, when the subscriber has edited the content of the short message, the number of short message segments, obtained by splitting the content of the short message edited by the subscriber in the operator's network, and the corresponding cost is calculated and displayed to the subscriber so that the subscriber can learn timely and accurately of the actual cost for the short message edited by the subscriber in various real application scenarios (for example, different unit prices being charged by different operators or different unit prices resulting from preferential activities provided by the same operator for different subscribers).

It should be understood by those skilled in the art that, in the fifth embodiment, the displaying of the number of the short message and the displaying of the cost for the short message by the display module 63 may be executed successively or simultaneously, depending on the requirements of practical applications, which is within the protection scope claimed by the solution of the fifth embodiment. It should be understood by those skilled in the art that, in the fourth and the fifth embodiments of the prompt apparatus of short message splitting according to the present invention, the splitting rule setting module 61, the network corresponding rule setting module 71 and the unit price setting module 91 may be configured independently or integrally, which is within the protection scope claimed by the solutions of the fourth and the fifth embodiments. In addition, all or part of the modules in the first to fifth embodiments of the prompt apparatus of short message splitting according to the present invention may be implemented directly by hardware or by programs which instruct the relevant hardware. When they are implemented by programs which instruct the relevant hardware, the programs may be stored in a computer readable storage medium, such as Read Only Memory (ROM), Random Access Memory (RAM), magnetic disk, optical disc, etc.

### Embodiments of computer program products

In the embodiments of the computer program products, the computer products include optical disc or magnetic disk storing the corresponding software module executive programs, which program the hardware modules in the above-described embodiments of the prompt apparatus of short message splitting via a computer.

In the first embodiment of the computer program products, the computer program products include: a splitting rule setting module configured to pre-obtain splitting rule data for a short message transmitted by a subscriber of a terminal in various operators' networks; a calculation module configured to calculate the number of short message segments obtained by splitting the short message edited by the subscriber based on the splitting rule data obtained by the splitting rule setting module; and an informing module configured to inform the subscriber of the number of short message segments calculated by the calculation module. The informing module includes a display module configured to display the calculated number of the short message segments to the subscriber or a voice prompt module configured to prompt the subscriber with the number of the short message segments using voice.

In the first embodiment of the computer program products, the splitting rule setting module pre-obtains the splitting rule data actually used for the short message transmitted by the subscriber terminal in various operators' networks, not a fixed splitting rule used by the existing terminal, such that various splitting rules adopted by various operators' networks for different subscribers can be reflected timely and accurately, thereby ensuring the flexibility and accuracy fully. The calculation module calculates the number of short message segments obtained by splitting the short message edited by the subscriber based on the splitting rule data for the short message transmitted by the subscriber of the terminal in various operators' networks, which is pre-obtained by the splitting rule setting module, and the display module displays the number of short message segments, which is calculated by the calculation module, to the subscriber such that the subscriber can be prompted timely and accurately with the number of short message segments obtained by splitting actually the short message edited by the subscriber in operators' networks.

It should be understood by those skilled in the art that, in the first embodiment of the computer program products according to the present invention, the splitting rule setting module may pre-obtain the splitting rule data in various manners, such as receiving the splitting rule data delivered by a server, obtaining actively the splitting rule data from the server, or pre-storing the splitting rule data in the terminal, all of which are within the protection scope claimed by the solution of the first embodiment of the computer program products. In other words, in the first embodiment of the computer program products according to the present invention, the splitting rule setting module may include: a storage unit configured to pre-store the splitting rule data for the short message transmitted by the subscriber of the terminal in various operators' networks; and/or an acquisition unit configured to pre-obtain the splitting rule data for the short message transmitted by the subscriber of the terminal in various operators' networks; and/or a receiving unit configured to pre-receive the splitting rule data for the short message transmitted by the subscriber of the terminal, which is sent by the server, in various operators' networks.

It should be understood by those skilled in the art that, in the first embodiment of the computer program products according to the present invention, according to the requirements of practical applications, two implementation modes may be adopted, that is, the mode in which the calculation module calculates instantly the number of the short message segments when the subscriber edits the short message and the display module displays instantly the number of the short message segments when the subscriber edits the short message, and/or the mode in which the calculation module calculates the number of the short message segments after the subscriber has edited the short message and the display module displays the number of the short message segments after the subscriber has edited the short message, or one or both of the two implementation modes may be selected based on the predefined setting of the subscriber, all of which are within the protection scope claimed by the solution of the first embodiment of the computer program products. For example, in the implement mode where the number of the short message segments is calculated and displayed instantly when the subscriber edits the short message, in the first embodiment of the computer program products, the calculation module may include a first instant calculation unit connected with the splitting rule setting module and the display module and configured to calculate instantly, when the subscriber edits the short message, the number of the short message segments obtained by splitting the short message inputted and edited by the subscriber based on the splitting rule data corresponding to various operators' networks and transmit the number of the short message segments to the display module to display it to the subscriber.

The difference between the second and the first embodiments of the computer program products according to the present invention is that the second embodiment further includes a network corresponding rule setting module configured to pre-store, pre-obtain or pre-receive the rule data on the correspondence between the subscriber number and the operator's network, which is sent by the server. The calculation module includes an instant analysis unit connected with the network corresponding rule setting module and a second instant calculation unit connected with the splitting rule setting module, the instant analysis unit and the display module. The instant analysis unit is configured to learn of the operator's network corresponding to the called number inputted or selected by the subscriber based on the corresponding rule data stored by the network corresponding rule setting module when the subscriber inputs and edits the short message. The second instant calculation unit is configured to obtain the splitting rule data, which is stored by the segmentation rule setting module and is corresponding to the operator's network known by the instant analysis unit, and calculate instantly the number of short message segments obtained by splitting the short message inputted and edited by the subscriber based on the obtained splitting rule data and transmit it to the display module, which displays it to the subscriber instantly.

In the second embodiment, the instant analysis unit learns of the operator's network employed when the subscriber edits the short message based on the pre-obtained corresponding relationship rule data between the subscriber number (which is an identification number assigned to the subscriber by the operator and used to uniquely identify the subscriber) and the operator's network and the called number inputted or selected by the subscriber (from a number record pre-stored by the terminal). Then, the second instant calculation unit calculates the number of short message segments obtained by splitting the content of the short message edited by the subscriber based on the splitting rule data of the operator's network and the display module displays it instantly to the subscriber. Therefore, the subscriber, when editing the short message, may learn clearly and momentarily that the number of short message segments obtained by splitting actually the short message entered by the subscriber in various operators' networks changes with the increasing and decreasing of the entered content. Thus, the corresponding and exact number of short message segments may be calculated and displayed for the operator's network employed actually when the subscriber edits the short message, thereby further increasing the flexibility.

The difference between the third and the first embodiments of the computer program products according to the present invention is that the third embodiment further includes a network corresponding rule setting module configured to pre-store, pre-obtain or pre-receive the rule data on the correspondence between the subscriber number and the operator's network, which is sent by the server. The calculation module includes an analysis unit connected with the network corresponding rule setting module and an overall calculation unit connected with the splitting rule setting module, the analysis unit and the display module. The analysis unit is configured to learn of the operator's network corresponding to the called number inputted or selected by the subscriber based on the corresponding rule data stored by the network corresponding rule setting module after the subscriber has edited the short message. The overall calculation unit is configured to obtain the splitting rule data, which is stored by the splitting rule setting module and is corresponding to the operator's network known by the analysis unit, and calculate the number of short message segments obtained by splitting the short message inputted and edited by the subscriber based on the obtained splitting rule data and transmit it to the display module, which displays it to the subscriber.

The difference between the third and the second embodiments of the computer program products according to the present invention is that in the third embodiment, the number of the short message segments is calculated and displayed after the subscriber has inputted and edited the content of the short message, thereby decreasing the influence of frequent calculation and display of the number of the short message segments on performance of the terminal.

The difference between the fourth and the second embodiments of the computer program products according to the present invention is that the fourth embodiment further includes a unit price setting module configured to pre-store, pre-obtain or pre-receive the unit price for charging the short message transmitted by the subscriber of the terminal, which is sent by the server, in various operators' networks. The calculation module further includes an first cost calculation unit connected with the unit price setting module, the instant analysis unit, the second instant calculation unit and the display module and configured to obtain the unit price, which is stored by the unit price setting module and is corresponding to the operator's network known by instant analysis unit, calculate the corresponding cost for the short message based on the obtained unit price and the number of short message segments obtained by the second instant calculation unit and transmit it to the display module, which displays it to the subscriber.

In the fourth embodiment of the computer program products according to the present invention, when the subscriber inputs and edits the content of the short message, the number of short message segments, obtained by splitting the content of the short message edited by the subscriber in the operator's network, and the corresponding cost are calculated instantly and displayed to the subscriber such that the subscriber can learn timely and accurately of the actual cost for the short message edited by the subscriber and can control the length of content of the edited short message based on the cost information.

It should be understood by those skilled in the art that, in the fourth embodiment, the display module displaying the number of the short message and displaying the cost for the short message may be executed successively or simultaneously, depending on the requirements of practical applications, which is within the protection scope claimed by the solution of the fourth embodiment.

The difference between the fifth and the third embodiments of the computer program products according to the present invention is that the fifth embodiment further includes a unit price setting module configured to pre-store, pre-obtain or pre-receive the unit price for charging the short message transmitted by the subscriber of the terminal, which is sent by the server, in various operators' networks. The calculation module further includes a second cost calculation unit connected with the unit price setting module, the analysis unit, the overall calculation unit and the display module and configured to obtain the unit price, which is stored by the unit price setting module and is corresponding to the operator's network known by instant analysis unit, calculate the corresponding cost for the short message based on the obtained unit price and the number of short message segments obtained by the overall calculation unit and transmit it to the display module, which displays it to the subscriber.

In the fifth embodiment of the computer program products according to the present invention, after the subscriber has edited the content of the short message, the number of short message segments, obtained by splitting the short message inputted and edited by the subscriber in the operator's network, and the corresponding cost are calculated and displayed to the subscriber such that the subscriber can learn timely and accurately of the actual cost for the short message edited by the subscriber in various real application scenarios (for example, different unit prices charged by different operators or different unit prices resulting from preferential activities provided by the same operator for different subscribers).

It should be understood by those skilled in the art that, in the fifth embodiment, the displaying of the number of the short message and the displaying of the cost for the short message by the display module may be executed successively or simultaneously, depending on the requirements of practical applications, which is within the protection scope claimed by the solution of the fifth embodiment. It should be understood by those skilled in the art that, in the fourth and the fifth embodiment of the computer program products, the splitting rule setting module, the network corresponding rule setting module and the unit price setting module may be configured independently or integrally, which is within the protection scope claimed by the solutions of the fourth and fifth embodiments.

It should be noted that the above embodiments are merely illustrative and not limiting the solutions of the present invention. Although the present invention is described in detail with reference to the aforementioned embodiments, it will be understood by those skilled in the art that the solutions contained in the aforementioned embodiments may be modified or part of technical features thereof may be replaced equivalently without departing from the spirit and scope of the invention.

## Claims

1. A prompt method of short message splitting comprising:
pre-obtaining, by a terminal, splitting rule data for a short message transmitted by a subscriber of the terminal in various operators' networks; and
calculating, by the terminal, the number of short message segments obtained by splitting the short message edited by the subscriber based on the splitting rule data and informing the subscriber.

2. The prompt method of short message splitting according to claim 1, wherein the calculating, by the terminal, the number of short message segments obtained by splitting the short message edited by the subscriber based on the splitting rule data and informing the subscriber of it further comprises calculating, by the terminal, the number of short message segments obtained by splitting the short message edited by the subscriber based on the splitting rule data and displaying the number to the subscriber.

3. The prompt method of short message splitting according to claim 2, wherein the pre-obtaining, by the terminal, splitting rule data for the short message transmitted by the subscriber of the terminal in various operators' networks further comprises pre-storing, pre-obtaining or pre-receiving, by the terminal, the splitting rule data for the short message transmitted by the subscriber of the terminal, which is sent by the server, in various operators' networks.

4. The prompt method of short message splitting according to claim 2, wherein the calculating, by the terminal, the number of short message segments obtained by splitting the short message edited by the subscriber based on the splitting rule data and displaying it to the subscriber comprises calculating, by the terminal, the corresponding number of the short message segments obtained by splitting the short massage inputted and edited by the subscriber based on the splitting rule data corresponding to various operators' networks and displaying it to the subscriber when the subscriber inputs and edits the short message.

5. The prompt method of short message splitting according to claim 2, further comprising:
pre-storing, pre-obtaining or pre-receiving, by the terminal, the rule data on the correspondence between the subscriber number and the operator's network, which is sent by the server;
wherein the calculating, by the terminal, the number of short message segments obtained by splitting the short message edited by the subscriber based on the splitting rule data and displaying it to the subscriber comprises learning of, by the terminal, the operator's network corresponding to the called number inputted or selected by the subscriber when the subscriber inputs and edits the short message, obtaining the splitting rule data of the operator's network corresponding to the called number from the splitting rule data pre-stored by the terminal, and calculating instantly the number of short message segments obtained by splitting the short message inputted and edited by the subscriber based on the obtained splitting rule data and displaying it instantly to the subscriber.

6. The prompt method of short message splitting according to claim 2, further comprising:
pre-storing, pre-obtaining or pre-receiving, by the terminal, the rule data on the correspondence between the subscriber number and the operator's network, which is sent by the server;
wherein the calculating, by the terminal, the number of short message segments obtained by splitting the short message edited by the subscriber based on the splitting rule data and displaying it to the subscriber comprises learning of, by the terminal, the operator's network corresponding to the called number inputted or selected by the subscriber based on the corresponding rule data after the subscriber has edited the short message, obtaining the splitting rule data of the operator's network corresponding to the called number from the splitting rule data pre-stored by the terminal, and calculating the number of short message segments obtained by splitting the short message edited by the subscriber based on the obtained splitting rule data and displaying it to the subscriber.

7. The prompt method of short message splitting according to claim 5 or 6, further comprising:
pre-storing, pre-obtaining or pre-receiving, by the terminal, the unit price for charging the short message transmitted by the subscriber of the terminal, which is charged by various operators' networks and sent by the server; and
after calculating the number of the short message segments, obtaining the unit price corresponding to the known operator's network based on the unit price pre-stored by the terminal, calculating the corresponding cost for the short message based on the obtained unit price and the calculated number of the short message segments and displaying it to the subscriber.

8. A prompt apparatus of short message splitting comprising:
a splitting rule setting module configured to pre-obtain splitting rule data for a short message transmitted by a subscriber of a terminal in various operators' networks;
a calculation module configured to calculate the number of short message segments obtained by splitting the short message edited by the subscriber based on the splitting rule data obtained by the splitting rule setting module; and
an informing module configured to inform the subscriber of the number of short message segments calculated by the calculation module.

9. The prompt apparatus of short message splitting according to claim 8, wherein the informing module is a display module configured to display the number of short message segments calculated by the calculation module to the subscriber.

10. The prompt apparatus of short message splitting according to claim 9, wherein the splitting rule setting module comprises:
a storage unit configured to pre-store the splitting rule data for the short message transmitted by the subscriber of the terminal in various operators' networks; and/or
an acquisition unit configured to pre-obtain, from a server, the splitting rule data for the short message transmitted by the subscriber of the terminal in various operators' networks; and/or
a receiving unit configured to pre-receive the splitting rule data for the short message transmitted by the subscriber of the terminal, which is sent by the server, in various operators' networks.

11. The prompt apparatus of short message splitting according to claim 9, wherein the calculation module comprises a first instant calculation unit configured to calculate, when the subscriber inputs and edits the short message, the corresponding number of the short message segments obtained by splitting the short massage inputted and edited by the subscriber based on the splitting rule data stored by the splitting rule setting module and corresponding to various operators' networks respectively and transmit the number of the short message segments to the display module to display it to the subscriber.

12. The prompt apparatus of short message splitting according to claim 9, further comprising:
a network corresponding rule setting module configured to pre-store, pre-obtain or pre-receive the rule data on the correspondence between the subscriber number and the operator's network, which is sent by the server;
wherein the calculation module comprises an instant analysis unit and a second instant calculation unit,
the instant analysis unit is configured to learn of the operator's network corresponding to the called number inputted or selected by the subscriber based on the corresponding rule data stored by the network corresponding rule setting module when the subscriber inputs and edits the short message, and
the second instant calculation unit is configured to obtain the splitting rule data, which is stored by the splitting rule setting module and is corresponding to the operator's network known by the instant analysis unit, and calculate the number of short message segments obtained by splitting the short message inputted and edited by the subscriber based on the obtained splitting rule data and transmit it to the display module, which displays it to the subscriber instantly.

13. The prompt apparatus of short message splitting according to any one of claim 9 to 12 further comprising:
a network corresponding rule setting module configured to pre-store, pre-obtain or pre-receive the rule data on the correspondence between the subscriber number and the operator's network, which is sent by the server,
wherein the calculation module comprises an analysis unit and an overall calculation unit;
the analysis unit is configured to learn of the operator's network corresponding to the called number inputted or selected by the subscriber based on the corresponding rule data stored by the network corresponding rule setting module after the subscriber has edited the short message; and
the overall calculation unit is configured to obtain the splitting rule data, which is stored by the splitting rule setting module and is corresponding to the operator's network known by the analysis unit, and calculate the number of short message segments obtained by splitting the short message edited by the subscriber based on the obtained splitting rule data and transmit it to the display module, which displays it to the subscriber.

14. The prompt apparatus of short message splitting according to claim 12, further comprising:
a unit price setting module configured to pre-store, pre-obtain or pre-receive the unit price for charging the short message transmitted by the subscriber of the terminal, which is sent by the server, in various operators' networks,
wherein the calculation module further comprises a first cost calculation unit configured to obtain the unit price corresponding to the operator's network known by the instant analysis unit, calculate the corresponding cost for the short message based on the unit price corresponding to the known operator's network and the number of short message segments calculated by the second instant calculation unit and transmit it to the display module, which displays it to the subscriber.

15. The prompt apparatus of short message splitting according to claim 13, further comprising:
a unit price setting module configured to pre-store, pre-obtain or pre-receive the unit price for charging a short message transmitted by the subscriber of the terminal, which is sent by the server, in various operators' networks,
wherein the calculation module further comprises a second cost calculation unit configured to obtain the unit price corresponding to the operator's network known by the analysis unit, calculate the corresponding cost for the short message based on the unit price corresponding to the known operator's network and the number of short message segments obtained by the overall calculation unit and transmit it to the display module, which displays it to the subscriber.
